Europäisches Patentamt

European Patent Office

Office européen des brevets

(11) Publication number: **0 099 271**
**B1**

# EUROPEAN PATENT SPECIFICATION

(45) Date of publication of patent specification: **01.06.88**

(51) Int. Cl.⁴: **C 08 F 297/06**

(21) Application number: **83304102.3**

(22) Date of filing: **14.07.83**

(54) **Block copolymers of olefins with vinyl aromatic monomers.**

(30) Priority: **14.07.82 IT 2238682**

(43) Date of publication of application:
**25.01.84 Bulletin 84/04**

(45) Publication of the grant of the patent:
**01.06.88 Bulletin 88/22**

(84) Designated Contracting States:
**BE DE FR GB NL**

(56) References cited:
**FR-A-2 412 575**
**US-A-3 509 056**

**CHEMICAL ABSTRACTS, vol. 83, no. 8, 25th
August 1975, page 145, no. 61238u, Columbus,
Ohio, USA**

**CHEMICAL ABSTRACTS, vol. 72, no. 8, 23rd
February 1970, page 22, no. 32469n, Columbus,
Ohio, USA**

**CHEMICAL ABSTRACTS, vol. 75, no. 4, 26th
July 1971, page 9, no. 21142m, Columbus,
Ohio, USA**
**Ullmanns Encyclopädie der Technischen
Chemie, 4th Edition, vol. 19, pages 197-198,
Verlag Chemie, DE Weinheim, 1980**

(73) Proprietor: **Montedison S.p.A.**
**31, Foro Buonaparte**
**I-20121 Milan (IT)**

(72) Inventor: **Nocci, Roberto**
**170 Corso XXIII Marzo**
**Novara (IT)**
Inventor: **Attala, Giancarlo**
**3, Via Montenero**
**Novara (IT)**
Inventor: **Del Giudice, Luciano**
**6, P. le Siena**
**Milan (IT)**
Inventor: **Cohen, Robert Edward**
**73, Pershing Road**
**Jamaica Plain, Mass. 02130 (US)**
Inventor: **Bertinotti, Floriana**
**76, V. le Giovanni XXIII**
**Novara (IT)**

(74) Representative: **Whalley, Kevin et al**
**MARKS & CLERK 57/60 Lincoln's Inn Fields
London WC2A 3LS (GB)**

## Description

This invention relates to block copolymers of ethylene and/or alpha-olefins of formula $CH_2=CHR$, where R is an alkyl radical having from 1 to 4 carbon atoms, with vinyl aromatic monomers.

Copolymers of olefins with vinyl aromatic monomers, in particular styrene, known up to now are of the statistical type or are of the block type, in which, however, the polystyrenic block has an atactic structure. Considering the type of structure of the polystyrenic block, these copolymers do not exhibit properties of practical interest. There is no knowledge up to now of block copolymers of styrene with alpha olefins, in which the polystyrenic block has sufficiently long stereoregular structure with the possibility, therefore, of producing crystallinity of polystyrenic type detectable by means of X-rays.

There is known from the disclosure of US Patent No. US—A—3509056 a process for preparing a block copolymer in the presence of a titanium compound and an aluminium compound which contains a polyolefinic block and a block derived from styrene, wherein moreover stereoregular polystyrene segments are present.

It is also known to be common practice to use in catalytic polymerization reactions a Ti catalyst in supported form on $MgCl_2$, c.f. ULLMANS ENCYCLOPADIE der technischen Chemie, 4.Auflage, Volume 19, pages 197—198, Verlag Chemie, DE Weinheim, 1980.

The present invention relates to a new class of block copolymers of ethylene and/or alpha-olefins with vinyl aromatic monomers, a process for their preparation, and their use as compatibilizing agents in polymeric compositions.

The present invention in one aspect provides a block copolymer of ethylene and/or an alpha olefin of formula $CH_2=CHR$, where R is an alkyl radical having from 1 to 4 carbon atoms, with a vinyl aromatic monomer, comprising at least two polymeric blocks each of at least 50 monomeric units, one of which is polyolefinic and the other of which has a stereoregular structure formed by units deriving from the vinyl aromatic monomer, and wherein the polymeric blocks deriving from the vinyl aromatic monomer have a mainly isotactic structure.

Thus the invention provides crystalline block copolymers of olefins with vinyl aromatic monomers preferably showing crystallinity of polyolefinic type, comprising at least two blocks each containing at least 50 monomeric units, one block being polyolefinic and the other being formed by units deriving from the vinyl aromatic monomer and characterized by stereoregular structure.

More preferably the invention relates to bi-block copolymers of ethylene or propylene with styrene exhibiting crystallinity both of polyolefinic type and polystyrenic type, formed by a polyolefinic block having isotactic structure when the recurrent monomeric unit is propylene, and by a polystyrenic block with isotactic structure as well.

It has in fact been surprisingly found that the raw polymer obtained by polymerization in subsequent steps of styrene and of an alpha olefin, in particular propylene, with the use of a particular catalyst and polymerization conditions, contains a fraction with a block copolymer structure comprising two blocks, one of which is polypropylenic with isotactic structure and the other of which is polystyrenic with isotactic structure as well.

Similarly, if instead of an alpha olefin ethylene is polymerized, a raw polymer is obtained, from which, by fractionation with solvent, it is possible to separate a fraction with a block copolymer structure of · ethylene and styrene, exhibiting crystallinity of polyethylenic type and the polystyrenic block having isotactic structure.

Similar results are obtained by using vinyl aromatic monomers other than styrene, such as for instance ortho-methyl styrene, ortho-chlorostyrene and 1-vinylnaphthalene.

The invention in another aspect provides a process for the preparation of a polymerized raw material comprising a block copolymer according to the invention wherein during a first polymerization step the vinyl aromatic monomer is polymerized in a homogeneous liquid phase comprising a solvent in which the polymer formed of the vinyl aromatic monomer is at least swellable, in presence of a coordination catalyst which is stereospecific in the polymerization of propylene and comprises a titanium compound supported on a magnesium halide, polymerization being carried out at a temperature less than 50°C, and wherein in a subsequent polymerization step ethylene and/or an alpha olefin is polymerized at a temperature of at least 50°C.

The conditions to obtain the block copolymers of the invention comprise, as first step, the polymerization of styrene or of another vinyl aromatic monomer in a homogeneous liquid phase in the presence of a solvent in which the polymer of the vinyl aromatic monomer is at least swellable. Aromatic hydrocarbons, such as benzene, xylene or toluene, are generally used as solvents.

Styrene itself can act as polymerizing medium.

The subsequent step is the polymerization of ethylene or of an alpha olefin performed in conditions in which there is practically no polymerization of styrene or other vinyl aromatic monomer.

The catalysts used in the process are of the type supported on Mg halide. They include at least a Ti compound supported on an anhydrous Mg halide in active form. In case of preparation of block copolymers of alpha olefins, in order to obtain polyolefinic blocks with stereoregular, possibly isotactic, structure, supported catalysts with high stereospecificity are used.

Catalysts of the above-mentioned type are well known in the literature. Examples of these catalysts are described in U.S. Patent Nos. 4 298 718; 3 803 105; 4 113 654; 3 953 414; 4 107 413; 4 107 414 and 4 226 741.

It has been found that, working with the above-mentioned supported catalysts, the polymerization of styrene or other vinyl aromatic monomer easily occurs at temperatures lower than about 50°C, while working at higher temperatures the yield in polymer rapidly decreases to negligible values.

Independently of the type of catalyst used (highly stereospecific, or not exhibiting stereospecificity in the polymerization of propylene) the polystyrene which is obtained has mainly an isotactic structure.

The polymerization of ethylene and alpha olefins easily occurs at temperatures of at least 50°C, also working in presence of the solvents used in the polymerization of the vinyl aromatic monomers.

As far as the composition is concerned, copolymers according to the invention may suitably contain from 10 to 90% of units deriving from ethylene or alpha olefin and from 90 to 10% of units deriving from vinyl aromatic monomer. Particularly interesting properties have been found in copolymers containing 30—70% by weight of units deriving from the olefinic monomer and 70—30% by weight of units deriving from the vinyl aromatic monomer.

The copolymers of the invention have physical and mechanical properties very different from those of the copolymers known up to now and better than those of the mixtures of the corresponding homopolymers.

The properties of the copolymers are in some respects better than those of homopolymers themselves.

As already mentioned, the block copolymers of the invention in particular find application as compatibilizing agents, particularly of mixtures of crystalline polymers of olefins with polymers of vinyl aromatic monomers which, as known, are not compatible with each other. Particularly interesting results are obtained by using two-block copolymers.

More specifically, the block copolymers of the invention find application as compatibilizing agents in compositions comprising polyethylene or isotactic polypropylene and polystyrene. In such compositions the compatibilizing effect is already present with quantities of copolymer of 5% by weight with respect to the homopolymers. The block copolymers of the invention act in two respects, both decreasing the size of the dispersed phase and creating a link with the matrix. This is a consequence of the simultaneous presence in the chain of two segments which, chemically equivalent to the two main components, establish continuity which, when steric identity exists in addition to chemical identity, is stabilized by the participation of the segments of the copolymeric chain to the crystalline areas of the corresponding homopolymers which form the mixture.

It is known that compatibility between polymers is often present in case of amorphous polymers. On the contrary, compatibility, at molecular level, seldom exists in mixtures of polymers in which one or both the components are semi-crystalline polymers and no case is known in which compatibility is reached without affecting the kinetics of crystallization and/or the percentage of crystallinity, to which many characteristics of applicative interest of the crystallizable polymers have to be attributed. As a matter of fact the rare cases of real miscibility which exist in the thermodynamic sense can be attributed to solubilization of the amorphous phases.

Only a few polymers exhibit, in limited ranges of concentration, evidence of co-crystallization. These exhibit a variation in the X-ray diffraction pattern which indicates interaction at the crystalline state. This is the case in respect of a mixture of poly-ε-caprolactone with isotactic polypropylene and probably also with polyethylene at low density.

The absence of compatibility between the polymers forming the mixture leads to heterogeneity of the phases which adversely affects the physical and mechanical properties, which show a definite decrease reaching even lower values than those of pure polymers and which moreover are extremely variable.

These behaviours are emphasized when a mixture of polymers whch crystallize is involved. In such cases the segregation of the other component as a separate phase occurs. Segregation can also occur during heat-treatments to which manufactured articles are subjected.

The invention will be further described with reference to the following illustrative Examples.

Example 1

50 cc of anhydrous toluene and 200 cc of styrene, that had been freshly-distilled on Al-triethyl, were introduced into a 1 lt glass autoclave, provided with a manometer, a thermometer and a magnetic stirrer, in an atmosphere of anhydrous nitrogen.

50 cc of anhydrous toluene, 1.5 mM of Al-triisobutyl and 0.5 mM of p.ethyltoluate (EPT) were placed separately into a tail test-tube and left to cold react for 5 minutes; then 294 mg of a supported catalyst were introduced, such catalyst being obtained according to Example 1 of U.S. Patent No. 4 226 741, and the whole mixture was siphoned with nitrogen into the above-mentioned autoclave containing the monomer.

The mixture was left under stirring and at room temperature for 1 minute; then a mixture formed by 50 cc of toluene, 1.5 mM of Al-triisobutyl and 0.5 mM of EPT was introduced and the whole was pressurized with propylene up to 3.04 bars (3 atm). After 60 minutes at room temperature at constant $P_{c-3}$, the temperature was raised to 50°C and the mixture was allowed to react for three hours.

After such time polymerization is stopped by methanol and 100% hydrochloric acid, and 140.6 g of polymeric product in a yield of 29000 g/gTi were isolated.

The product was extractable for 11% with methylethyl ketone (MEK) at ebullition; the residue

3

contained 54% by weight of styrol and had an $[\eta] = 6$ dl/g (tetralin at 135°C).

The product was dissolved in alpha-chloronaphthalene and subjected to fractional crystallization to isolate homopolymers.

The resulting copolymer had an $[\eta] = 2.2$ dl/g and 13 C NMR and IR analysis confirmed its two-block structure and its composition of 50/50 by weight of styrene/propylene.

The copolymer was then moulded in a compression press at 270°C for 5 minutes and then cooled in a press kept at 20°C.

On samples obtained from such foils the dynamic-mechanical spectra were determined by means of a torsional pendulum with free oscillations; the properties under traction according to ASTM 1708 (condition B) and the impact strength under traction according to ASTM D 1822 were also determined.

For comparison, the data of a sample of isotactic polypropylene having $\overline{M}w = 450{,}000$, of a test sample of isotactic polystyrene having $\overline{M}w = 500{,}000$, and of a mixture of 50/50 by weight of polystyrene/polypropylene were obtained. The samples were prepared under the same conditions as indicated for the copolymer.

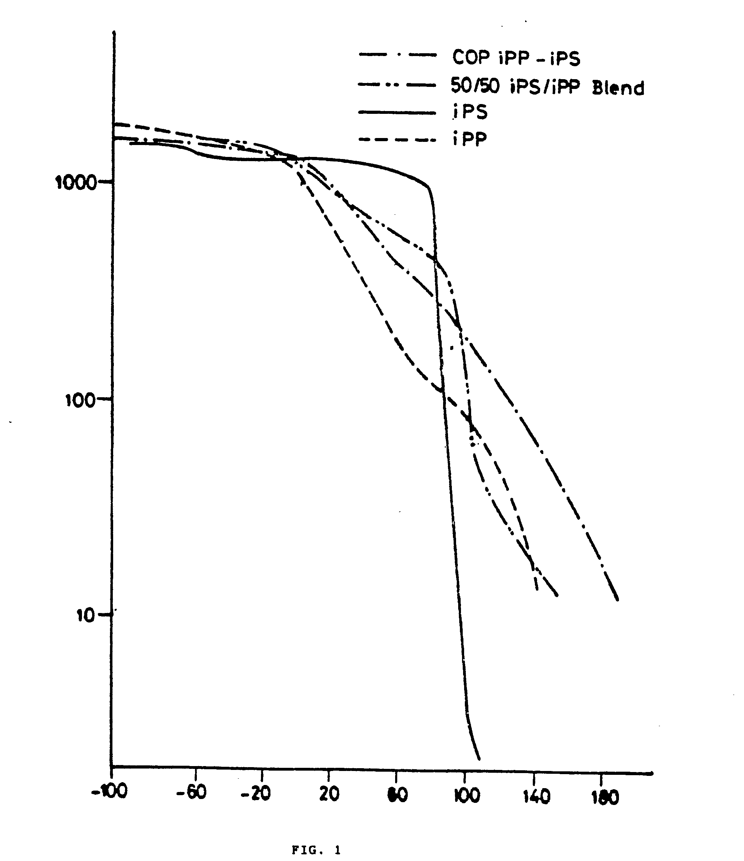

The results obtained are shown in Table I below, and in the accompanying drawing which is a graph showing how the tangential G' (MPa) modulus of different samples, indicated along the ordinate, varies according to temperature (°C), indicated along the abscissa. Determinations were performed by means of a torsional pendulum with free oscillations.

TABLE I

| Sample | E (MPa) | $\delta_y$ (Mpa) | $\varepsilon_y$ (%) | $\delta_B$ (Mpa) | $\varepsilon_B$ (%) | $E_B$ (KJ/m$^2$) | $\delta_B$ (Mpa) |
|---|---|---|---|---|---|---|---|
| Cop.iPP-iPS | 1100 | 29.8 | 6.2 | 26.8 | 260 | 49 | 25.6 |
| iPS | 1500 | — | — | 41.0 | 3.6 | 12 | 9.8 |
| iPP | 800 | 23.0 | 11.5 | 31.2 | 880 | 30 | 22.3 |
| Sample No. 1 of Example 3 | 1150 | — | — | 17.9 | 3.7 | 7 | 5.6 |

$E$ = elastic modulus
$\delta_y$ = yield point
$\varepsilon_y$ = yield strain
$\delta_B$ = breaking load
$\varepsilon_B$ = ultimate elongation
$E_B$ = breaking energy
$\delta_B$ = maximum load

Example 2

The procedure described in Example 1 was repeated using n.heptane as solvent and performing the first step of polymerization for five minutes instead of one minute. After pressurization with $C_3^=$ at 3.04 bars (3 atmospheres), the temperature was raised to 50°C and the mixture was allowed to react for 7 hours.

77 g of polymeric product were isolated (yield 13500 g/gTi), extractable for 14.8% with MEK at ebullition; the residue contained 23% by weight of styrene and had an $[\eta] = 5$ dl/g.

In a similar manner as described in Example 1, NMR and IR analysis was carried out on the purified product. The resulting product was thereby shown to be a two-block copolymer containing 30% by weight of polystyrene and having an $[\eta] = 1.8$ dl/g.

Example 3

The mixtures indicated in Tables II and III below were prepared by dissolving the polymers in orthodichlorobenzene at 160°C and by precipitating with a 1:1 mixture of methanol and acetone at room temperature.

The precipitates obtained after drying were moulded in laminae according to the procedure described in Example 1.

Samples were obtained from the laminae and were subjected to impact-traction measurements according to ASTM D 1822. Microtomed small slices of the examples were observed by means of an optical microscope in polarized light and the size of the phases was determined. The results of the impact-traction tests and the sizes of the phases are given in Table II.

TABLE II

| Sample No. | Mixture * cop.iPP-iPS/iPS/iPP | Size of the phase (μm) | $^E$B (KJ/m$^2$) | $^δ$B (MPa) |
|---|---|---|---|---|
| 1 | 0 / 50 / 50 | 33 — 84 | 7 | 5.6 |
| 2 | 5/47.5/47.5 | 10 — 13 | 22 | 15.5 |
| 3 | 20 / 40 / 40 | 4 — 10 | 26 | 18.2 |
| 4 | 50 / 25 / 25 | 3 — 6 | 48 | 32.5 |
| 5 | 80 / 10 / 10 | 2.2 — 4.4 | 51 | 33.2 |

\* Cop. iPP — iPS  = copolymer of Example 1

    iPS           = isotactic polystyrene of Example 1

    iPP           = isotactic polypropylene of Example 1

## Example 4

The mixtures indicated in Table III were prepared according to the procedure described in Example 1 and the mixtures were subjected to impact-traction measurements, similarly to the manner described in Example 1.

The results obtained are given in Table III.

TABLE III

| Sample No. | Mixture * cop.ipp-iPS/aPS/iPP | $^E$B (KJ/M$^2$) | $^δ$B (MPa) |
|---|---|---|---|
| 1 | 0 / 50 / 50 | 15 | 11.2 |
| 2 | 20 / 40 / 40 | 25 | 18.6 |

\* Cop. iPP — iPS  = copolymer of Example 1

    aPS           = atactic polystyrene having $\overline{M}w$ = 65,000

    iPP           = isotactic polypropylene of Example 1

## Example 5

The procedure of Example 1 was repeated using toluene as solvent and performing the first step of polymerization for one minute. Dilution was carried out with an equal volume of toluene and, after addition of 1.5 mM of Al-triisobutyl and 0.5mM of EPT, ethylene was bubbled into the solution for 60 minutes at room temperature and for three hours at 50°C. 90 g of polymeric product were isolated in a yield of 23000 g/gTi.

The product proved to be extractable for 5% with MEK at ebullition; the residue contained 76.2% by weight of polystyrene and had an [η] = 7.2 dl/g (tetralin at 135°C).

NMR, IR, DSC and X-ray analysis was carried out on the purified product as indicated in Example 1. The resulting product was thus shown to be two-block copolymer of 85/15 composition, having an [η] = 3.1 dl/g.

**Claims**

1. A block copolymer of ethylene and/or an alpha olefin of formula $CH_2=CHR$, where R is an alkyl radical having from 1 to 4 carbon atoms, with a vinyl aromatic monomer, characterized by comprising at least two polymeric blocks each of at least 50 monomeric units, one of which is polyolefinic and the other of which has a stereoregular structure formed by units deriving from the vinyl aromatic monomer, and in that the polymeric blocks deriving from the vinyl aromatic monomer have a mainly isotactic structure.

2. A block copolymer as claimed in claim 1, characterized in that it exhibits crystallinity of polyolefinic type.

3. A block copolymer as claimed in claim 1, characterized in that it exhibits crystallinity both of polyolefinic type and of polymeric type deriving from the vinyl aromatic monomer.

4. A block copolymer of propylene with styrene as claimed in claim 3, characterized in that both the polypropylenic blocks and the polystyrenic blocks have an isotactic structure.

5. A block copolymer of an alpha olefin with a vinyl aromatic monomer as claimed in claim 1, characterized in that both the polyolefinic blocks and the polymeric blocks deriving from the vinyl aromatic monomer have an isotactic structure.

6. A block copolymer of ethylene with a vinyl aromatic monomer as claimed in claim 1, characterized in that it exhibits crystallinity of polyethylenic type.

7. A block copolymer of ethylene with styrene as claimed in Claim 1, characterized in that it exhibits crystallinity both of polyethylenic type and of polystyrenic type, and in that the polystyrenic blocks have an isotactic structure.

8. A block copolymer as claimed in any of claims 1 to 7, characterized by comprising from 10 to 90% of monomeric units deriving from ethylene and/or an alpha olefin and from 90 to 10% of units deriving from the vinyl aromatic monomer.

9. A block copolymer as claimed in Claim 8, characterized by comprising 30 to 70% of monomeric units deriving from ethylene and/or an alpha olefin and from 70 to 30% of units deriving from the vinyl aromatic monomer.

10. A process for the preparation of a polymerized raw material comprising a block copolymer according to any of Claims 1 to 9, characterized in that during a first polymerization step the vinyl aromatic monomer is polymerized in a homogeneous liquid phase comprising a solvent in which the polymer formed of the vinyl aromatic monomer is at least swellable, in presence of a coordination catalyst which is stereospecific in the polymerization of propylene and comprises a titanium compound supported on a magnesium halide, polymerization being carried out at a temperature less than 50°C, and in that in a subsequent polymerization step ethylene and/or an alpha olefin is polymerized at a temperature of at least 50°C.

11. The use of a block copolymer as claimed in any of Claims 1 to 9, as a compatibilizing agent in a polymeric composition comprising polyethylene and/or a polymer of an alpha olefin and a polymer of a vinyl aromatic monomer, in particular a composition comprising polyethylene or isotactic polypropylene and isotactic polystyrene.

**Patentansprüche**

1. Blockcopolymer von Ethylen und/oder einem α-Olefin der Formel $CH_2=CHR$, worin R ein Alkylrest mit 1 bis 4 Kohlenstoffatomen is, mit einem aromatischen Vinylmonomer, dadurch gekennzeichnet, daß es mindestens zwei Polymerblöcke umfaßt, von denen jeder mindestens 50 Monomereinheiten umfaßt, von denen einer polyolefinisch ist und der andere eine stereoreguläre Struktur aufweist, die durch Einheiten gebildet wird, welche sich von dem aromatischen Vinylmonomer ableiten, und daß die Polymerblöcke, die sich von dem aromatischen Vinylmonomer ableiten, hauptsächlich isotaktische Struktur aufweisen.

2. Blockcopolymer nach Anspruch 1, dadurch gekennzeichnet, daß es Kristallinität polyolefinischen Typs aufweist.

3. Blockcopolymer nach Anspruch 1, dadurch gekennzeichnet, daß es Kristallinität sowohl polyolefinischen Typs als auch polymeren Typs, der sich vom aromatischen Vinylmonomer ableitet, aufweist.

4. Blockcopolymer von Propylen mit Styrol nach Anspruch 3, dadurch gekennzeichnet, daß sowohl die Polypropylenblöcke als auch die Polystyrolblöcke isotaktische Struktur aufweisen.

5. Blockcopolymer eines α-Olefins mit einem aromatischen Vinylmonomer nach Anspruch 1, dadurch gekennzeichnet, daß sowohl die Polyolefinblöcke als auch die Polymerblöcke, welche sich von dem aromatischen Vinylmonomer ableiten, isotaktische Struktur aufweisen.

6. Blockcopolymer von Ethylen und einem aromatischem Vinylmonomer nach Anspruch 1, dadurch gekennzeichnet, daß es Kristallinität des Polyethylen-Typs aufweist.

7. Blockcopolymer von Ethylen und Styrol nach Anspruch 1, dadurch gekennzeichnet, daß es Kristallinität sowohl vom Polyethylen-Typ als auch vom Polystyrol-Typ aufweist und daß die Polystyrolblöcke isotaktische Struktur haben.

8. Blockcopolymer nach irgendeinem der Ansprüche 1 bis 7, dadurch gekennzeichnet, daß es 10 bis 90 % Monomereinheiten, welche sich von Ethylen und/oder einem α-Olefin ableiten, und 90 bis 10 % Einheiten, welche sich vom aromatischen Vinylmonomer ableiten, umfaßt.

9. Blockcopolymer nach Anspruch 8, dadurch gekennzeichnet, daß es 30 bis 70% Monomereinheiten, welche sich von Ethylen und/oder einem α-Olefin ableiten und 70 bis 30 % Einheiten, welche sich von dem aromatischen Vinylmonomer ableiten, umfaßt.

10. Verfahren zur Herstellung eines polymerisierten Rohmaterials, welches ein Blockcopolymer nach irgendeinem der Ansprüche 1 bis 9 umfaßt, dadurch gekennzeichnet, daß während eines ersten Polymerisationsschrittes das aromatische Vinylmonomer in einer homogenen flüssigen Phase, die ein Lösungsmittel, in dem das aus aromatischem Vinylmonomer gebildete Polymer zumindest quellbar ist, umfaßt, in Anwesenheit eines Koordinationskatalysators, der bei der Polymerisation von Propylen stereospezifisch wirkt und eine Titanverbindung, die auf ein Magnesiumhalogenid aufgebracht ist, umfaßt, polymerisiert wird, wobei die Polymerisation bei einer Temperatur unter 50°C durchgeführt wird, und wobei in einem nachfolgenden Polymerisationsschritt Ethylen und/oder ein α-Olefin bei Temperaturen von mindestens 50°C polymerisiert werden.

11. Verwendung eines Blockcopolymers nach irgendeinem der Ansprüche 1 bis 9 als Kompatibilisierungsmittel in einer Polymerzusammensetzung, die Polyethylen und/oder ein Polymer eines α-Olefins und ein Polymer eines aromatischen Vinylmonomers umfaßt, insbesondere einer Zusammensetzung, die Polyethylen oder isotaktisches Polypropylen und isotaktisches Polystyrol umfaßt.

## Revendications

1. Un copolymère bloc d'éthylène et/ou d'alpha-oléfine de formule $CH_2=CHR$, dans laquelle R représente un radical alkyle renfermant de 1 à 4 atomes de carbone, avec un monomère vinyl-aromatique, caractérisé en ce qu'il comprend au moins deux blocs polymères d'au moins chacun 50 motifs monomères, l'un de ces blocs étant un bloc polyoléfinique et l'autre bloc ayant une structure stéréo-régulière formée par des motifs provenant du monomère vinyl-aromatique, et en ce que les blocs polymères provenant du monomère vinyl-aromatique présentent une structure principalement isotactique.

2. Un copolymère bloc selon la revendication 1, caractérisé en ce qu'il présente une cristallinité de type polyoléfinique.

3. Un copolymère bloc selon la revendication 1, caractérisé en ce qu'il présente une cristallinité à la fois de type polyoléfinique et de type polymère provenant du monomère vinyl-aromatique.

4. Un copolymère bloc de propylène avec du styrène selon la revendication 3, caractérisé en ce qu'à la fois les blocs polypropyléniques et les blocs polystyréniques présentent une structure isotactique.

5. Un copolymère bloc d'une alpha-oléfine avec un monomère aromatique selon la revendication 1, caractérisé en ce que les blocs polyoléfiniques et les blocs polymériques provenant du monomère vinyl-aromatique présentent tous les deux une structure isotactique.

6. Un copolymère bloc d'éthylène avec un monomère vinyl-aromatique selon la revendication 1, caractérisé en ce qu'il présente une cristallinité de type polyéthylénique.

7. Un copolymère bloc d'éthylène avec un styrène selon la revendication 1, caractérisé en ce qu'il présente une cristallinité à la fois de type polyéthylénique et de type polystyrénique, et en ce que les blocs polystyréniques ont une structure isotactique.

8. Un copolymère bloc selon l'une quelconque des revendications 1 à 7, caractérisé en ce qu'il comprend de 10 à 90% de motifs monomères provenant de l'éthylène et/ou d'une alphaoléfine et de 90 à 10% de motifs provenant du monomère vinylaromatique.

9. Un copolymère bloc selon revendication 8, caractérisé en ce qu'il comprend de 30 a 70% de motifs monomères provenant d'éthylène et/ou d'une alpha-oléfine et de 70 à 30% de motifs provenant du monomère vinyl-aromatique.

10. Un procédé de préparation d'une matière brute polymérisée comprenant un copolymère bloc selon l'une quelconque des revendications 1 à 9, caractérisé en ce que, pendant une première étape de polymérisation, on polymérise le monomère vinyl-aromatique dans une phase liquide homogène comprenant un solvant dans lequel le polymère formé du monomère vinylaromatique est au moins susceptible de gonfler, en présence d'un catalyseur de coordination qui est stéréospécifique dans la polymérisation du propylène et comprend un dérivé du titane supporté sur un halogènure de magnésium, la polymérisation étant mise en oeuvre à une température inférieure à 50°C, et en ce que, dans une étape de polymérisation ultérieure, on polymérise de l'éthylène et/ou une alpha-oléfine à une température d'au moins 50°C.

11. L'utilisation d'un copolymère bloc selon l'une quelconque des revendications 1 à 9, comme agent de compatibilisation dans une composition polymère comprenant du polyéthylène et/ou un polymère d'une alpha-oléfine et un polymère d'un monomère vinyl-aromatique, en particulier une composition comprenant du polyéthylène ou du polypropylène isotactique et du polystyrène isotactique.

FIG. 1

1